(19) Europäisches Patentamt

European Patent Office

Office européen des brevets

(11) **EP 4 703 997 A1**

(12) **EUROPEAN PATENT APPLICATION**

(43) Date of publication:
04.03.2026 Bulletin 2026/10

(21) Application number: 25191888.4

(22) Date of filing: 25.07.2025

(51) International Patent Classification (IPC):
*G06Q 10/087* *(2023.01)*

(52) Cooperative Patent Classification (CPC):
G06Q 10/087

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 28.08.2024 IN 202411064929

(71) Applicant: Hand Held Products, Inc.
Charlotte, NC 28202 (US)

(72) Inventors:
• VALLINAYAGAM, Muthukumar
Charlotte, 28202 (US)
• GODAWARTHY, Kailash Kashyap
Charlotte, 28202 (US)
• PANDEY, Pankaj Kumar
Charlotte, 28202 (US)
• KAPOOR, Ujjwal
Charlotte, 28202 (US)

(74) Representative: Haseltine Lake Kempner LLP
Cheapside House
138 Cheapside
London EC2V 6BJ (GB)

(54) **SYSTEM AND METHOD FOR MANAGING PACKAGES**

(57) A system to manage packages is disclosed. The system comprises an antenna configured to emit one or more beams of a variable transmission power in one or more antenna sectors and a radio frequency identification (RFID) reader communicatively coupled to the antenna to receive an RFID signal from each of one or more incoming packages. Further, the RFID reader comprising the one or more processors coupled to the memory, the one or more processors configured to retrieve the data associated with each of the one or more packages, determine a weighted density factor of each of the one or more packages, determine a load density for each of the one or more antenna sectors, and adjust the variable transmission power of the antenna for each of the one or more antenna sectors based at least on the load density.

FIG. 3

**Description**

**TECHNOLOGICAL FIELD**

Example embodiments of the present disclosure relate generally to a system for managing one or more packages, and specifically relates to a system and method for managing the one or more packages while loading, offloading, and storing the one or more packages.

**BACKGROUND**

Radio frequency identification (RFID) technology is widely used in logistics and transportation for tracking and managing goods. In cargo areas such as trucks, RFID readers are typically mounted on a ceiling to read RFID tags attached to packages, enabling efficient inventory management during loading and unloading. However, the trucks present a challenging environment for RFID due to metal surfaces that cause signal reflections and attenuation, affecting the reliability of tag reads. Further, the variable transmission power of RFID readers remains non-optimized as per the load of packages inside the truck or arrangement of packages in stacks inside or outside the truck etc. Conventionally, the RFID readers in the trucks face the dilemma of achieving sufficient read coverage for packages positioned in any corner of the truck while avoiding unintentional reads outside the cargo area. Existing solutions often employ fixed variable transmission power levels, which may be insufficient as the truck load varies, leading to missed reads or false alarms during operation. Further, several RFID antennas may be used in a single truck that may be reduced or optimized as per several scenarios during transport of the packages through the truck.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

**BRIEF SUMMARY**

The following presents a simplified summary in order to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In an example embodiment, a system is disclosed. The system comprises an antenna configured to emit one or more beams of a variable transmission power in one or more antenna sectors and a radio frequency (RFID) reader communicatively coupled to the antenna to receive an RFID signal from each of one or more incoming packages. The one or more processors 108 further configured to retrieve data associated with each of the one or more packages from the memory, determine a weighted density factor of each of the one or more packages based at least on the data associated with each of the one or more packages, determine a load density for each of the one or more antenna sectors, based at least on the weighted density factor determined and information regarding placement of each of the one or more packages and adjust the variable transmission power of the antenna for each of the one or more antenna sectors based at least on the load density determined.

In some embodiments, the system further comprises at least one radar sensor communicatively coupled to the one or more processors and configured to detect size information associated with each of the one or more packages.

In some embodiments, the data corresponds to an expected size of each of the one or more packages stored within the memory, wherein the one or more processors are configured to provide an alert if the detected size information does not match the expected size of one of the one or more packages.

In some embodiments, upon receipt of a signal from the at least one radar sensor, the one or more processors cause the antenna to emit one or more beams toward an entry point.

In some embodiments, the antenna comprises a beamforming antenna (BFA), wherein the BFA is configured to focus the one or more beams in each of the one or more antenna sectors based at least on the adjusted variable transmission power.

In some embodiments, the data associated with each of the one or more packages comprise one or more characteristics of each of the one or more packages.

In some embodiments, the one or more characteristics comprise at least one of attenuation coefficient, absorbance coefficient, reflectivity coefficient related to radio frequency (RF) waves, smoothness, roughness, and thickness of each of the one or more packages.

In some embodiments, the information regarding placement of each of the one or more packages comprises information related to a predefined placement of each of the one or more packages within one or more zones.

In some embodiments, the each of the one or more zones corresponds to one of the one or more antenna sectors, and wherein the one or more zones are located in at least one of a vehicle or a warehouse.

In some embodiments, the one or more processors are configured to determine a distance between the antenna and each of the one or more packages based at least on the information regarding placement of each of the one or more packages, to adjust the predefined transmission power of the antenna.

In another example embodiment, a method is disclosed. The method comprising steps of retrieving, via one or more processors of a radio frequency (RFID) reader having a memory, data associated with each of one or more packages from the memory; determining, via the one or more processors, a weighted density factor of each of the one or more packages based at least on the data associated with each of the one or more packages; determining, via the one or more processors, a load density for each of the one or more antenna sectors, based at least on the weighted density factor determined and information regarding placement of each of the one or more packages; and adjusting, via the one or more processors, the variable transmission power of the antenna for each of the one or more antenna sectors based at least on the load density determined.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

**BRIEF DESCRIPTION OF THE DRAWINGS**

Having thus described certain example embodiments of the present disclosure in general terms, reference will hereinafter be made to the accompanying drawings, which are not necessarily drawn to scale, and wherein:

FIG. 1 illustrates a block diagram of a system to manage packages in accordance with an example embodiment of the present disclosure;

FIG. 2 illustrates an architectural view of the system in accordance with an example embodiment of the present disclosure;

FIG. 3 illustrates a block diagram showing operations of the system in accordance with an example of the present disclosure;

FIG. 4 illustrates a flowchart showing operations of at least one radar sensor in accordance with an example embodiment of the present disclosure;

FIG. 5 illustrates a table having a dataset associated with a weighted density factor in accordance with an example embodiment of the present disclosure;

FIG. 6 illustrates a manifest information associated with a cargo area in accordance with an example embodiment of the present disclosure.

FIG. 7A illustrates a top view of the cargo area installed with the system in a pre-loading phase in accordance with a first example embodiment of the present disclosure;

FIG. 7B illustrates a top view of the cargo area installed with the system in a loading phase in accordance with a second example embodiment of the present disclosure;

FIG. 8 illustrates a flowchart showing operations of the system in accordance with an example embodiment of the present disclosure;

FIG. 9 illustrates a flowchart of a method of operating the system in the loading phase in accordance with an example embodiment of the present disclosure; and

FIG. 10 illustrates a flowchart of a method in accordance with an example embodiment of the present disclosure.

DETAILED DESCRIPTION

Some embodiments will now be described more fully hereinafter with reference to the accompanying drawings, in which some, but not all, embodiments are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the invention described herein such that embodiments may include fewer or more components than those shown in the figures while not departing from the scope of the invention. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

Embodiments of the present disclosure will be described more fully hereinafter with reference to the accompanying drawings in which like numerals represent like elements throughout the several figures, and in which example embodiments are shown. Embodiments of the present disclosure may, however, be embodied in alternative forms and should not be construed as being limited to the embodiments set forth herein. The examples set forth herein are non-limiting examples and are merely examples among other possible examples.

The present disclosure provides various embodiments of a system and method to manage packages. Embodiments may comprise an antenna and a radio frequency based identification (RFID) reader that may be communicatively coupled to the antenna. Embodiments may be configured to emit one or more beams of a variable transmission power in one or more antenna sectors through the antenna. Embodiments may be configured to receive an RFID signal from each of the one or more incoming packages. The RFID reader may comprise one or more processors that may be coupled to a memory. Embodiments may be configured to retrieve the data associated with each of the one or more packages from the memory, through the at least one processor. Embodiments may be configured determine a weighted density factor of each of the one or more packages based at least on the data associated with each of the one or more packages using the at least one processor. Embodiments may be configured to determine a load density for each of the one or more antenna sectors, based at least on the weighted density factor determined and information regarding placement of each of the one or more packages through the at least one processor. Embodiments may be configured to adjust the variable transmission power of the antenna for each of the one or more antenna sectors based at least on the load density determined through the at least one processor.

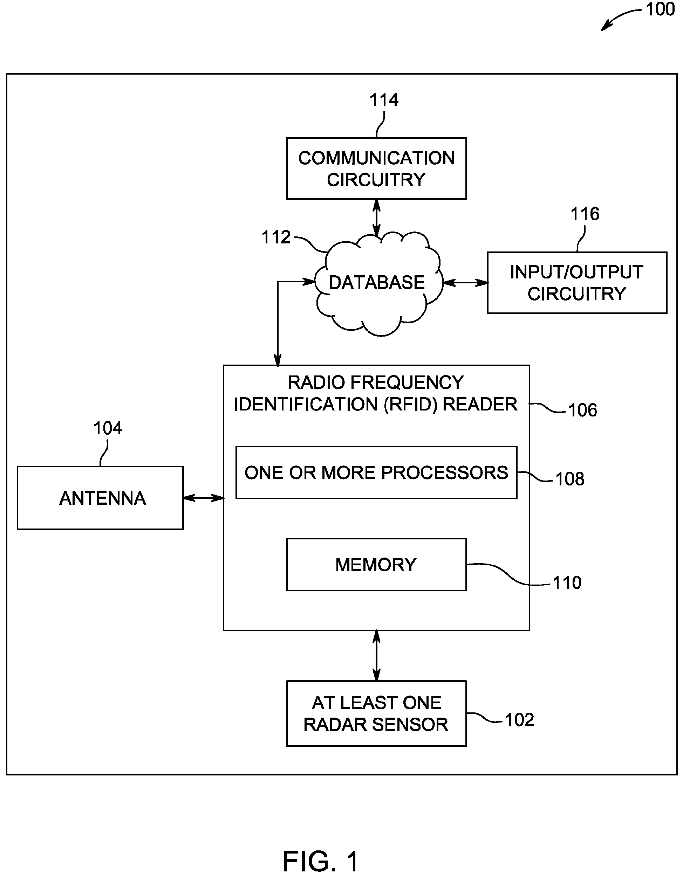

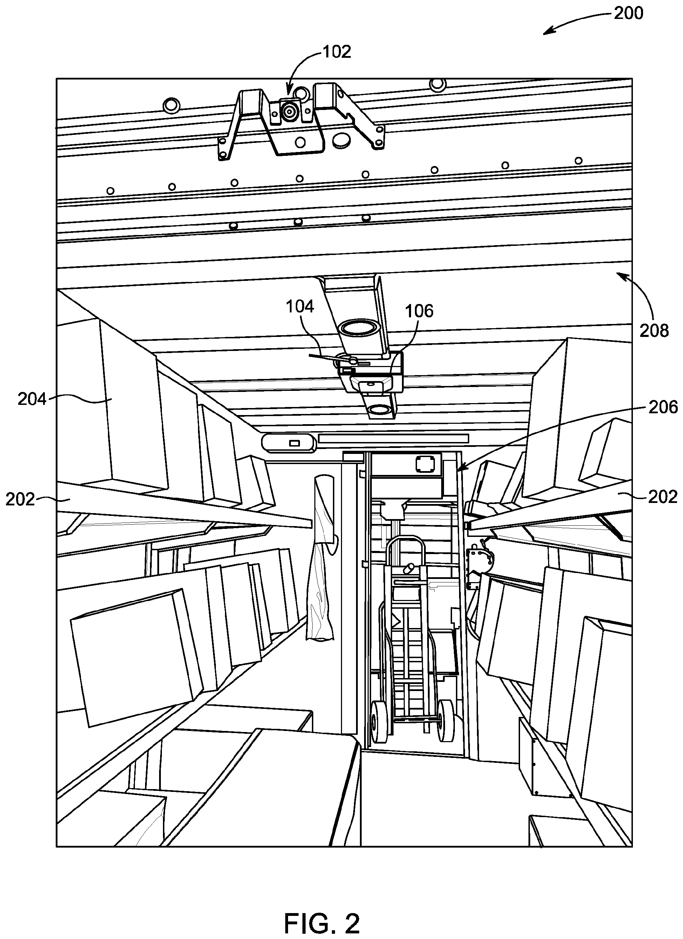

FIG. 1 illustrates a block diagram of a system 100 to manage packages, in accordance with an example embodiment of the present disclosure. FIG. 2 illustrates an architectural view of the system 100, in accordance with an example embodiment of the present disclosure.

The system 100 may comprise at least one radar sensor 102, an antenna 104 and a radio frequency identification (RFID) reader 106. In some embodiments, the RFID reader 106 may comprise one or more processors 108, a memory 110. Further the system 100 may further comprise a database 112, a communication circuitry 114, and an input/output circuitry 116. In some embodiments, the RFID reader 106 may be installed within a cargo area 200. In some embodiments, the cargo area 200 may correspond to at least one of a vehicle (e.g., a package car, a truck, or a courier van) or a warehouse. As illustrated in FIG. 2, the cargo area 200 may comprise one or more racks 202. Further, the one or more racks 202 may be configured to organize one or more packages 204. In some embodiments, the one or more racks 202 may ensure a maximum utilization and uniform accessibility of the one or more packages 204 placed on the one or more racks 202. In one example, the one or more racks 202 may be arranged on each parallel side of the cargo area 200. In some embodiments, the cargo area 200 may comprise an entry point 206. In some embodiments, the entry point 206 may provide access into the cargo area 200. In an example, a user may walk towards the entry point 206, pick up the one or more packages 204. The one or more packages 204 may be loaded inside the cargo area 200 through the entry point 206 or off-loaded out of the cargo area 200 through the entry point 206.

In some embodiments, the system 100 may comprise the at least one radar sensor 102. In some embodiments, the at least one radar sensor 102 may be installed within the cargo area 200. In some embodiments, the at least one radar sensor 102 may be configured to detect a presence of the one or more packages 204 being loaded inside the cargo area 200 through an entry point 206. In some embodiments, the at least one radar sensor 102 may detect the presence of the one or more packages 204 in a field of view (FOV). The FOV may correspond to an angular extent of physical area or space that the at least one radar sensor 102 may observe or capture. Further, the FOV of the at least one radar sensor 102 may be the entry point 206. In some embodiments, the at least one radar sensor 102 may comprise a transceiver that may be configured to transmit a plurality of radio frequency (RF) signals towards the one or more packages 204. Further, the plurality of RF signals may return back towards the at least one radar sensor 102, upon reflecting from surface of the one or more packages 204. In an example, the at least one radar sensor 102 may detect signals reflected from the one or more packages 204.

In some embodiments, the at least one radar sensor 102 may be arranged at various locations within the cargo area 200. Further, the various location may comprise at least one of the parallel walls of the cargo area 200, floor of the cargo area 200, or ceiling 208 of the cargo area 200. In some embodiments, the at least one radar sensor 102 may correspond to a millimeter (mm) wave based radar sensor. Further, the mm wave based radar sensor may be configured to detect the one or more packages 204 with precision and accuracy using mm wave signals. Further, the mm wave based radar sensor operates in the millimeter-wave in the range of 30 GHz - 300 GHz that ensures penetration of the mm-wave radio frequency signals through various types of packaging materials including at least cardboard, plastic, foam etc.

In one example, the one or more packages 204 may be loaded inside the cargo area 200 through the entry point 206. Further, the at least one radar sensor 102 may be arranged at the ceiling 208 of the cargo area 200. Further, the at least one radar sensor 102 may be configured to transmit the plurality of RF signals towards the one or more packages 204 coming through the entry point 206. Further, the plurality of RF signals may be configured to strike and reflect from the surface of the one or more packages 204. Further, the at least one radar sensor 102 may be configured to receive the plurality of RF signals reflected from the one or more packages 204. Further, the at least one radar sensor 102 may be configured to measure the time taken by the mm-wave radio frequency signals to reflect back from the one or more packages 204. The time taken by the mm-wave radio frequency signals to reflect back is proportional to a distance between the at least one radar sensor 102 and the one or more packages 204.

In some embodiments, the at least one radar sensor 102 may detect size information associated with each of the one or more packages 204. In some embodiments, the at least one radar sensor 102 may be coupled to the one or more processors 108. Upon receiving the size information from the at least one radar sensor 102, the one or more processors 108 may determine one or more features (e.g. range, velocity, and azimuth angle measurements) of the one or more packages 204. The feature extraction algorithm may correspond to methods used in machine learning and signal processing to identify and extract relevant characteristics or features from raw data. In one example, these features may facilitate the one or more processors 108 to identify a person carrying the one or more packages 204. In another example, the one or more processors 108 may comprise an object detection algorithm that may facilitate the one or more processors 108 to determine presence of the one or more packages 204.

In an example embodiment, the object detection algorithm may correspond to image processing, machine learning, or signal processing protocols to identify the one or more packages 204 in the FOV of the at least one radar sensor 102. Further, the one or more processors 108 may determine orientation of the one or more packages 204. In some embodiments, the one or more processors 108 may be configured to derive length, width, and height of each of the one or more packages 204 based at least on the size information received from the at least one radar sensor 102. Further, the one or more processors 108 may be configured to use one or more filtering and post processing protocols to enhance accuracy of the at least one radar sensor 102. The one or more filtering and post processing protocols may correspond to noise reduction measures involving data fusion with other radar sensors to determine the size information of the one or more packages 204 accurately.

As illustrated in FIG. 2, the antenna 104 may be mounted on the ceiling 208 of the cargo area 200. In an example, the antenna 104 may be mounted at least on or substantially near a center-most portion of the ceiling 208 of the cargo area 200. In another example, the antenna 104 may correspond to a beam forming antenna (BFA) that may also be referred as a radio frequency identification (RFID) based antenna. The BFA uses radio frequency identification (RFID) technology that omni-directionally adjusts direction of radio frequency (RF) signals emitted by the BFA. The BFA may be configured to focus the RF signals towards specific RFID tags on the one or more packages 204, for better read accuracy and range.

In some embodiments, the antenna 104 may be configured to emit one or more beams of a variable transmission power in each one or more antenna sectors. The antenna 104 may scan the one or more packages 204 using the one or more beams of the variable transmission power. Further, in an example, the antenna 104 may scan the RFID tag of the one or more packages 204 by emitting one or more beams of RF signals of the variable transmission power. In an example, the RFID tags may be coupled with each of the one or more packages 204. In an example, the RFID tags coupled with the one or more packages 204 may be exposed under the one or more antenna sectors. The one or more antenna sectors may correspond to a defined range representing the read-coverage of the antenna 104.

In some embodiments, the RFID reader 106 may be installed at the ceiling 208 of the cargo area 200. In an example, the RFID reader 106 may be installed near at least one of the entry point 206 of the cargo area 200. In another example, the RFID reader 106 may be installed near the antenna 104. In some embodiments, the RFID reader 106 may be communicatively coupled to the antenna 104. In some embodiments, the RFID reader 106 may comprise the one or more processors 108. In some embodiments, each of the one or more processors 108 may include suitable logic, and/or interfaces that are operable to execute one or more instructions stored in the memory 110, based on the reflected radiofrequency signals to perform predetermined operations. In one embodiment, the one or more processors 108 may be configured to decode and execute any instructions received from one or more other electronic devices or server(s). The one or more processors 108 may be configured to execute one or more computer-readable program instructions, such as program instructions to carry out any of the functions described in this description. Further, the one or more processors 108 may be implemented using one or more processor technologies known in the art. Examples of the one or more processors 108 may include, but are not limited to, one or more general purpose processors and/or one or more special purpose processors (e.g., digital signal processors or Field Programmable Gate Array (FPGA) processor).

In some embodiments, the RFID reader 106 may be communicatively coupled to the antenna 104. In some embodiments, the RFID reader 106 may receive an RFID signal from each of one or more incoming package. In some embodiments, the RFID tags, upon being powered by the RF signals, may reflect RFID signals back to the RFID reader 106. The RFID signals may correspond to a unique identifier (UID). In an example, the UID along with data of various other UIDs may be stored in a database 112.

In an example, the database 112 may correspond to a cloud database. Further, the database 112 may be communicatively coupled to the RFID reader 106. In some embodiments, the database 112 may be linked to the RFID reader 106 via the communication circuitry 114. Further, the database 112 may be configured to store data regarding a type of the one or more packages 204 in relation to the respective UIDs. In some embodiments, the memory 110 may be configured to store an expected size of each of the one or more packages and one or more characteristics of each of the one or more packages 204 may be stored in the memory 110. Further, the one or more characteristics may correspond to attenuation coefficient, absorbance coefficient, and/or reflectivity coefficient related to radio frequency (RF) waves specific to each of the one or more packages 204. In an example, the type of each of the one or more packages 204 may relate to type of one or more objects packed inside each of the one or more packages 204. The attenuation coefficient, absorbance coefficient, and/or reflectivity coefficient may be dependent on smoothness, roughness, and thickness of the type of one or more objects packed inside each of the one or more packages 204, respectively. In some embodiments, the one or more processors 108 of the RFID reader 106 may be configured to fetch the data from the database 112 and/or the memory 110 via the input/output circuitry 116. In an example, the input/output circuitry 116 in the database 112 helps manage the flow of data between the database 112 and the one or more processors 108 of the RFID reader 106.

In some embodiments, the one or more processors 108 of the RFID reader 106 may be configured to retrieve data associated with each of the one or more packages 204 from the database 112 and/or the memory 110 and size information of each of the one or more packages 204. Further, the one or more processors 108 may retrieve UIDs based data from the database 112. In some embodiments, the one or more processors 108 may be configured to classify each of the one or more packages 204, based at least on the size information and data associated with each of one or more packages 204.

In some embodiments, the one or more processors 108 may be configured to determine a weighted density factor of each of the one or more packages 204 based on the data associated with each of the one or more packages 204. In some embodiments, the data associated with each of the one or more packages corresponds to one or more characteristics of each of the one or more packages, wherein the one or more characteristics comprise at least one of attenuation coefficient, absorbance coefficient, and/or reflectivity coefficient related to radio frequency (RF) waves, smoothness, roughness, and thickness of each of the one or more packages.

In some embodiments, the one or more processors 108 may be configured to determine a load density for one or more antenna sectors based on the weighted density factor and information regarding placement of each of the one or more packages 204. In some embodiments, information regarding placement of the each of the one or more packages 204 may correspond to information related to a predefined placement of each of the one or more packages within one or more zones. The information regarding placement of the each of the one or more packages 204 is called a manifest information. The manifest information may be provided in a hard copy that is posted in or near the cargo area 200 or stored within the database 112. In an example, a load density may relate to the distribution of the one or more packages 204 104 within a specified volume, relative to designated space inside the cargo area 200. The load density may assess how densely the cargo area 200 may be occupied by the one or more packages 204. In an example, a high load density may relate to a scenario where the cargo area 200 may be densely packed with the one or more packages 204 with relatively less free space. In another example, a low load density may correspond to relatively more free space available, as the cargo area 200 may be less densely packed with the one or more packages 204.

In some embodiments, the one or more processors 108 may be configured to determine the one or more antenna sectors where the one or more packages 204 need to be stored based on information regarding placement of each of the one or more packages 204. In some embodiments, the information regarding placement of each of the one or more packages 204 corresponds to information related to a predefined placement of each of the one or more packages 204 within one or more zones. In an example, the RFID tag may comprise information regarding the one or more racks 202 of at least one of the one or more zones of the cargo area 200. Further, the information provided by the RFID tag may further define an exact position in the one or more racks 202 of the cargo area 200 where each of the one or more packages 204 is to be stored. The one or more processors 108 may be configured to identify the exact location in the one or more racks 202 in accordance with the one or more antenna sectors.

In an example, one of the one or more packages 204 may have the RFID tag attached thereto. The information corresponding to the RFID tag may be matched with the manifest information. The manifest information corresponds to information regarding placement of the each of the one or more packages 204. In an embodiment, the one or more processors 108 may determine that the one of the one or more packages 204 need to be stored on third row of the one or more racks 202 in the cargo area 200. Further, the one or more processors 108 may determine the one or more zones corresponding to the one or more antenna sectors encompassing the third row of the one or more racks 202. Thus, the one or more processors 108 may determine the one or more antenna sectors where RF signals may be focused based on the manifest information.

In some embodiments, the one or more processors 108 may be configured to adjust the variable transmission power of the antenna 104 in the one or more antenna sectors based at least on the load density. In an example, an instance where the load density of an area inside the cargo area 200 may be high, depicting that high number of the one or more packages 204 stored in the area. Therefore, the one or more processors 108 may increase the variable transmission power of the antenna 104 to be able to send optimum RF signals towards each of the one or more packages 204. In another instance, the load density of the area may be low, depicting that lower number of the one or more packages 204 stored in the area. Therefore, the one or more processors 108 may decrease the variable transmission power of the antenna 104 to be able to send RF signals towards each of the one or more packages 204 as per the requirements and stray RF signals may be reduced.

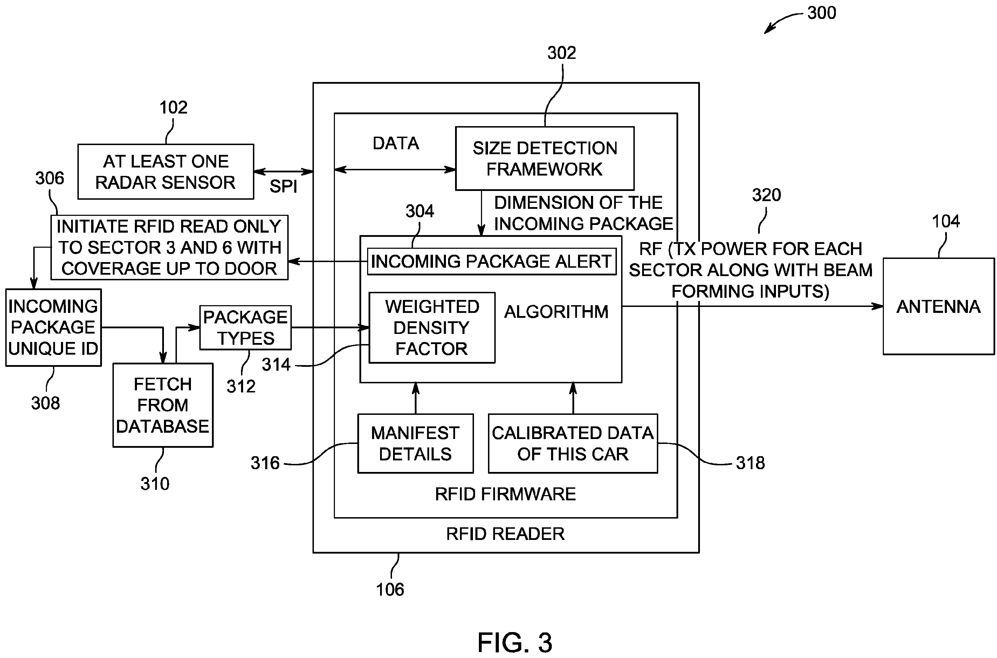

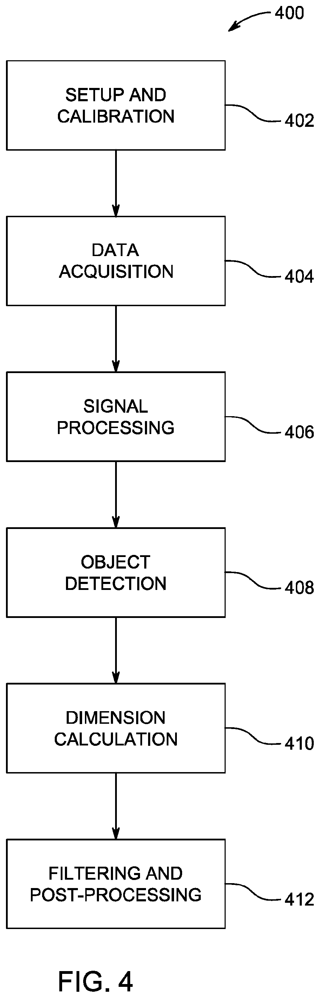

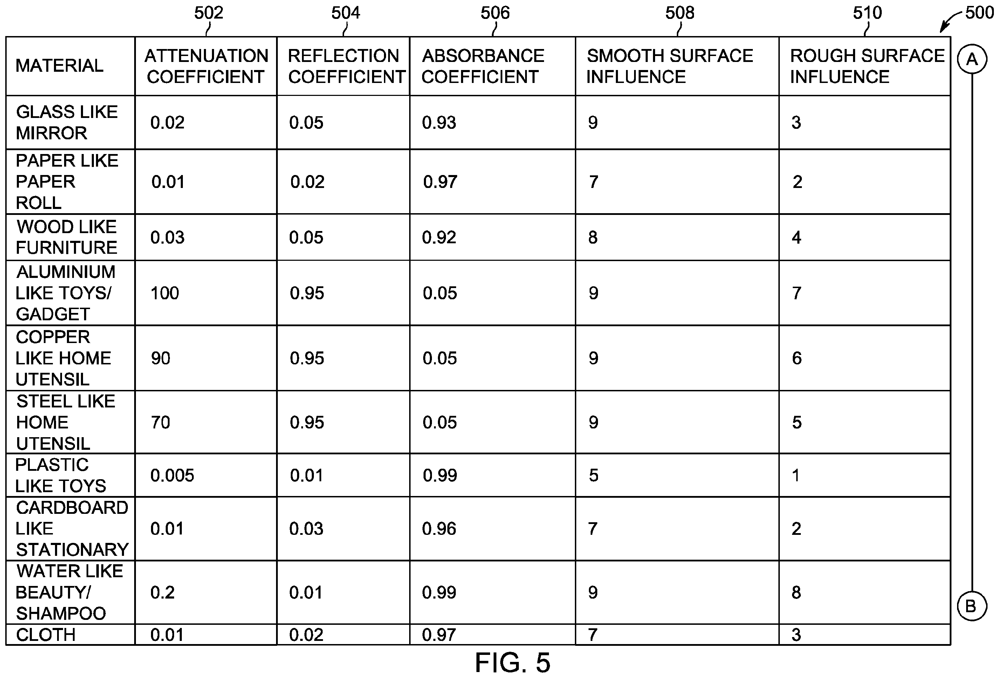

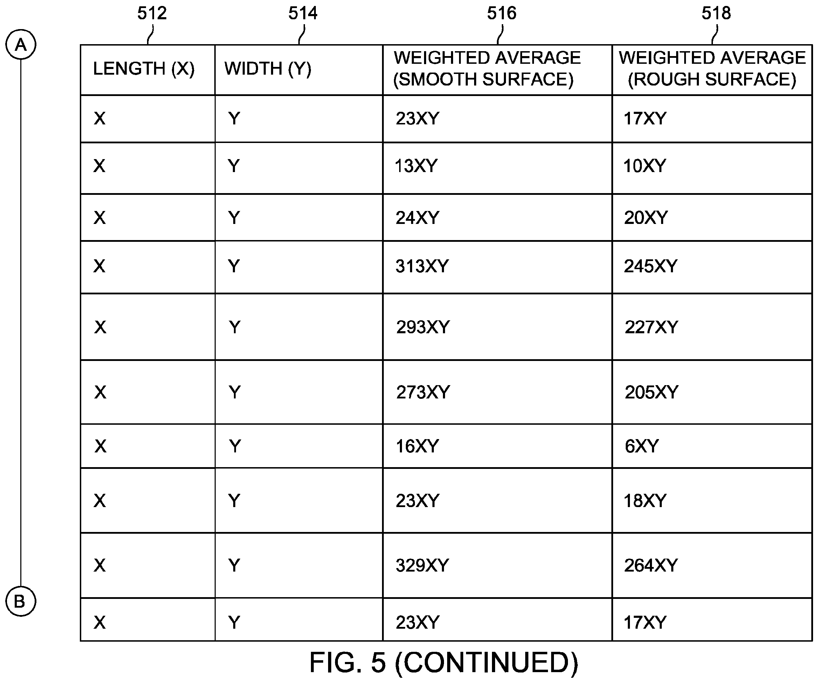

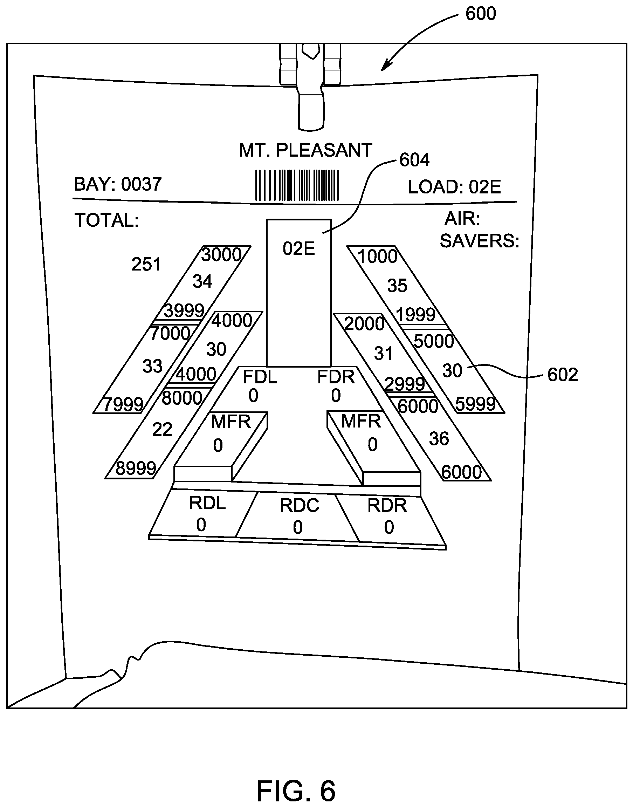

FIG. 3 illustrates a block diagram showing operations of the system 100, in accordance with an example of the present disclosure. FIG. 4 illustrates a flowchart showing operations of at least one radar sensor 102, in accordance with an example embodiment of the present disclosure. FIG. 5 illustrates a table having a dataset associated with a weighted density factor, in accordance with an example embodiment of the present disclosure. FIG. 6 illustrates the manifest information 600 associated with the cargo area 200, in accordance with an example embodiment of the present disclosure. FIGS. 3-6 are described in conjunction with FIGS. 1-2.

In some embodiments, the system 100 may comprise the at least one radar sensor 102 mounted inside the cargo area 200 to detect presence of the one or more packages 204 and determine the size information of each of the one or more packages 204. Further, the system 100 may comprise the antenna 104. Further, the antenna 104 may be configured to scan the one or more packages 204 by transmitting one or more beams of the variable transmission power and detect the RFID tags of each of the one or more packages 204. Further, the RFID reader 106 may be communicatively coupled to the antenna 104 to adjust the variable transmission power of the antenna 104 as per the load density of the one or more packages 204 when stored in the one or more antenna sectors.

In an example embodiment, the system 100 may be installed in within the cargo area 200 such as a package transport car. In some embodiments, the cargo area 200 may further comprise the ceiling 208, at least two side walls, an entry gate and an exit gate. The at least one radar sensor 102 may be mounted on the ceiling 208 of the cargo area 200 and near to at least at the entry point 206. In an instance, where at least one of the one or more the packages 204 may be loaded inside the cargo area 200 through the entry point 206. The at least one radar sensor 102 may be configured to detect size information of each of one or more packages 204 and send to the one or more processors 108 of the RFID reader 106.

In some embodiments, the RFID reader 106 may be mounted on the ceiling 208 of the cargo area 200. In an example, the RFID reader 106 may be integrated within the antenna 104 and preferably mounted at or substantially near a center-most portion of the ceiling 208. In an example, the RFID reader 106 may comprise the one or more processors 108 having an RFID firmware. In some embodiments, each of the one or more processors 108 may include suitable logic, circuitry, and/or interfaces such as RFID firmware that are operable to execute the one or more instructions stored in the memory 110, based on the reflected signals provided by the at least one radar sensor 102 to perform one or more operations. In some embodiments, the RFID firmware may correspond to an interface that controls and manages the one or more operations of the RFID reader 106. Further, the RFID firmware includes a set of instructions and protocols that may facilitate the RFID reader 106 to communicate with the RFID tags and perform specific tasks related to identifying, reading, and writing data on the RFID tags.

In some embodiments, the at least one radar sensor 102 may be configured to detect the one or more packages 204 and generate the size information of each of the one or more packages. Further, the one or more processors 108 may be configured to determine the size information associated with each of one or more packages 204 based at least on the data received from the at least one radar sensor 102. In an example, the at least one radar sensor 102 may correspond to the mm wave based radar sensor. The mm wave based radar sensor may be configured to transmit mm-wave radio frequency signals towards the one or more packages 204 and measure the time taken by the mm-wave radio frequency signals to reflect back from the one or more packages 204. Further, the time taken by the mm-wave radio frequency signals to reflect back from the one or more packages 204 is proportional to a distance between the at least one radar sensor 102 and the one or more packages 204. Further, the at least one radar sensor 102 may be communicatively coupled to the one or more processors 108 of the RFID reader 106. The one or more processors 108 upon receiving the reflected signals, may provide range, velocity, and azimuth angle measurements towards the RFID reader 106. Further, the one or more processors 108 may employ a size detection framework 302 having one or more algorithms to determine size information of the one or more packages 204.

It may be noted that the size detection framework 302 used by the one or more processors 108 to determine the size information of the one or more packages 204 is explained by one or more operations as illustrated in FIG. 4.

In some embodiments, the one or more processors 108 via the size detection framework 302 may determine the size information of the one or more packages 204. In some embodiments, the one or more processors 108 may retrieve the determined size of the one or more packages 204 from the at least one radar sensor 102 along with data associated with the one or more packages 204 from the database 112 or the memory 110. In some embodiments, the data associated with one or more packages 204 corresponds to RFID information along with one or more characteristics of the one or more packages 204. In some embodiments, the one or more processors 108 are configured to provide an alert 304 if the detected size information does not match the size information of one of the one or more packages 204.

In some embodiments, the size detection framework 302 may be a set of protocols to determine the size information of one of the one or more packages 204. As explained in flowchart 400 in FIG. 4, at operation 402, the one or more processors 108 may perform setup and calibration of the at least one radar sensor 102. In some embodiments, the at least one radar sensor 102 may be arranged at the ceiling 208 of the cargo area 200 with respect to the entry point 206. In an example, the one or more packages 204 may be loaded inside the cargo area 200 through the entry point 206. The at least one radar sensor 102 may be arranged at the front portion of the ceiling 208 (close to the entry point 206) of the cargo area 200. In some embodiments, the at least one radar sensor 102 may be calibrated with reference data related to the cargo area 200. In an example, the reference data may correspond to distance between the at least one radar sensor 102 and the entry point 206.

At operation 404, the at least one radar sensor 102 may perform data acquisition through radar signals. In some embodiments, the at least one radar sensor 102 may transmit the mm-wave radio frequency signals towards the one or more packages 204 and measure the time taken by the mm-wave radio frequency signals to reflect back from the one or more packages 204. The time taken by the mm-wave radio frequency signals to reflect back is proportional to a distance between the at least one radar sensor 102 and the one or more packages 204.

At operation 406, the at least one radar sensor 102 via the one or more processors 108 may perform processing of the mm-wave radio frequency signals reflected back from the one or more packages 204. The one or more processors 108 upon receiving the subsequent signals from the at least one radar sensor 102, may determine the range, velocity, and azimuth angle measurements of the one or more packages 204. The one or more processors 108 may employ a feature extraction algorithm to extract features from the range measurements. The feature extraction algorithm may correspond to methods used in machine learning and signal processing to identify and extract relevant characteristics or features from raw data.

At operation 408, the at least one radar sensor 102 may identify the one or more packages 204. The one or more processors 108 may employ an object detection algorithm to determine presence of the one or more packages 204. In an example embodiment, the one or more objects detection algorithm may correspond to image processing, machine learning, or signal processing protocols to identify the one or more packages 204 in the FOV of the at least one radar sensor 102. Further, the one or more processors 108 may determine orientation of the one or more packages 204 in relation to position of the at least one radar sensor 102.

At operation 410, the at least one radar sensor 102, via the one or more processors 108, may detect dimensions (i.e., size information) of each of the one or more packages 204. In some embodiments, the one or more processors 108 may use the range measurements derived from the subsequent signals from the at least one radar sensor 102 to calculate size information of the one or more packages 204. Further, based at least on the orientation of the at least one of the one or more packages 204 relative to the at least one radar sensor 102, length, width, and height of each of the one or more packages 204 may be derived.

At operation 412, the one or more processors 108 may use various filtering and post processing protocols enhance accuracy of the at least one radar sensor 102. In an example, the filtering and post processing protocols may correspond to noise reduction measures involving data fusion with other radar sensors to determine the size information of the one or more packages 204 accurately.

In an example, the one or more packages 204, referred as an incoming package, may be loaded inside the cargo area 200 from an entry gate. The entry gate may fall under specific antenna sectors (such as antenna sector 3 and antenna sector 6). In an example, the antenna sector 3 and the antenna sector 6 may correspond to antenna sector 708 and antenna sector 714, respectively. In some embodiments, according to signals received from the at least one radar sensor 102, the one or more processors 108 of the RFID reader 106 may activate the antenna 104 to emit one or more beams of RF signals of variable transmission power focused towards the specific antenna sectors. Further, the at least one radar sensor 102 may sense the RFID tag along with other data associated with the one or more packages 204. The one or more processors 108, based on the size information of each of the one or more packages 204. In an instance, the determined size may not match with the size information of the one or more packages 204 (i.e., retrieved at least from the database 112 or memory 110), the one or more processors 108 may provide an alert 304. In an example, the alert 304 may correspond to a scenario where a wrong package may be loaded inside the package transport car.

In some embodiments, the antenna 104 may initiate the one or more beams of the radio frequency (i.e., radio waves) towards the one or more antenna sectors (example - the antenna sector 3 and the antenna sector 6). In an example, the antenna 104 may be configured to transmit radio waves towards the sector 3 and sector 6 (as shown in 306 of FIG. 3). In an example, the antenna 104 may transmit radio waves by converting electrical signals from the RFID reader 106 into electromagnetic waves. In one example, when an alternating current (AC) flows through the antenna 104, the antenna 104 may create oscillating electric and magnetic fields that radiate outward as radio waves. Further, the radio waves may communicate with the RFID tags coupled with each of the one or more packages 204. In an example, the radio waves radiating out of the antenna 104 may communicate with RFID tag of the incoming package entering through the entry point 206 under the antenna sector 3 and antenna sector 6.

In some embodiments, each of the one or more packages 204 may be equipped with an RFID tag having a unique identifier (UID) 308. In an example, the RFID tag may be a radio frequency identification tag or the small electronic device comprising the microchip and the respective antenna. The microchip may be configured to store data and the respective antenna may be configured to transmit the data wirelessly that can be received by the RFID reader 106 via the antenna 104. In an example, to communicate with the RFID tags, the antenna 104 may transmit radio waves towards the antenna sector 3 and antenna sector 6 with at a specific variable transmission power depending on the distance between the antenna 104 and the distal end of the antenna sector 3 or sector 6. Further, the antenna 104 may capture signals (related to the UID 308) reflected back from the RFID tags and enable signals transmission towards the RFID reader 106.

In some embodiments, the database 112 may be communicatively coupled to the RFID reader 106 to store data regarding type of the one or more packages 204 according to the RFID tag. The type of the one or more packages 204 may relate to type of one or more objects packed inside each of the one or more packages 204. The type of one or more objects may include a material of the one or more objects, e.g., glass (like mirror), paper (like roll), wood (like furniture), aluminum (like toys/gadgets), copper (like home utensil), steel (like home utensil), plastic (like toys), cardboard (like stationary), water (like beauty/shampoo) or cloth (like clothing). In an example, the incoming package may contain a handheld mirror. The handheld mirror may be made of glass material. In an example the one or more processors 108 of the RFID reader 106 may fetch the data from the database 112 (as shown in 310 of FIG. 3).

In some embodiments, the RFID reader 106 may classify the one or more packages 204 into a package type of each of the one or more packages 312 based at least on the RFID tag. In an example, the RFID tag may comprise identity information of the incoming package. Further, the database 112 may include data regarding the one or more objects packed inside the incoming package. In another example, the RFID reader 106 may be configured to integrate the identity information with the data from the database 112 to determine the type of the incoming package as the package of the one or more packages 204 having the handheld mirror made of glass.

In some embodiments, the RFID reader 106 may be configured to determine a weighted density factor 314 of each of the one or more packages 204 based at least on the type and size information of the one or more packages 204. In an example, the RFID reader 106 may determine the type of the incoming package as the incoming package having the handheld mirror made of glass. As illustrated in table 500 in FIG. 5, a dataset having one or more characteristics associated with the weighted density factor 314 may be stored in the database 112. The one or more characteristics may include attenuation coefficient 502, reflection coefficient 504, absorbance coefficient 506 and surface finish influence of the type of material of the one or more object. The surface finish influence may include smooth surface influence 508 and rough surface influence 510. Further, the weight density factor may be dependent on the one or more other characteristics such as length (X) 512, width (Y) 514, weighted average (smooth surface) 516, and weighted average (rough surface) 518.

As illustrated in FIG. 5, for the handheld mirror made of glass, the attenuation coefficient may be 0.02, the reflection coefficient may be 0.05, the absorbance coefficient may be 0.93, the smooth surface influence may be 9 and the rough surface influence may be 3. Further, the size information of the one or more packages 204 e.g., the incoming package as determined via the at least one radar sensor 102 may correspond to length of X cm and width Y cm. In an example if the handheld mirror made of glass has a uniform smooth surface, the weighted density factor 314 may be calculated as weighted density factor (smooth surface) = ((0.02 * 100) + (0.05 * 100) + (1-0.93) * 100 + 9) * XY, wherein X = length and Y = width. Accordingly, the weighted density factor 314 may be 23 XY for smooth surface. In an instance, if length may be 30 cm and the width may be 40 cm, the weighted density factor= 23*30*40 = 27,600. In an example, to confine the weighted density factor 314 into acceptable range the weighted density factor 314 may be further processed as 10*log of (27600) = 44.40 Thus, in an example, the one or more packages 204 e.g. the incoming package may be loaded inside the cargo area 200, the RFID reader 106 via the at least one radar sensor 102, the antenna 104 and the database 112, may determine the weighted density factor 314 of the incoming package as 44.40 if the incoming package contains the handheld mirror made of glass.

In some embodiments, the memory 110 of the RFID reader 106 may include a manifest information 600 in the form of a digital manifest file also called manifest details 316, to determine the one or more antenna sectors based at least on the RFID tag and the manifest details 316. The manifest details 316 may correspond to information regarding placement of each of the one or more packages 204. In an example, the manifest details 316 may include different locations (i.e., different rows of the one or more racks 202) inside the cargo area 200 where the one or more packages 204 may be stored. The different locations may be predefined before the pre-loading phase. The preloading phase corresponds to the preparatory phase before loading the one or more packages 204 inside the cargo area 200 of the package transport car.

In an example embodiment, as illustrated in the FIG. 6, the manifest information 600 may include layout of the cargo area 200 having a plurality of rows 602 of the racks 202 and the entry point 604. The manifest information 600 may be drafted as a physical copy manifest file as in FIG. 6 or digital copy of manifest details 316 of FIG. 6. The manifest information 600 may comprise data related to total number of the one or more packages 204 or serial number of the one or more packages 204 (example - the row labelled as 34 may accommodate the one or more packages 204 having serial number between 3000 to 3999). In an example, the serial number of the one or more packages 204 may be encoded within the respective RFIDs. The layout may represent location of each of the one or more packages 204 on each of the one or more racks 202.

In an example, the one or more processors 108 may retrieve location of the one or more packages 204 (i.e. the incoming package) from the manifest information 600 and further determine the load density of the location. The location may fall within one or more zones. The one or more zones may be one of the one or more antenna sectors. Thus, based on the manifest information 600, the one or more processors 108 may determine load density of the one or more antenna sectors. In an example, the one or more packages 204 may be placed on innermost edge of the one or more rows 602 inside the cargo area 200 as depicted in the manifest information 600 illustrated in FIG. 6 The location may fall within the one or more zones of the one or more antenna sectors, example antenna sector 2 and the antenna sector 8. Thus, the RFID reader 106 may determine load density of the antenna sector 2 and the antenna sector 8.

In some embodiments, the memory 110 of RFID reader 106 may comprise a calibrated data 318 of the package transport car (i.e., the cargo area 200) in terms of the variable transmission power of the antenna 104 required during different phases of the package transport car such as preloading phase, loading phase, or off-loading phase. The preloading phase corresponds to the preparatory phase before loading the one or more packages 204 inside the cargo area 200 of the package transport car. The loading phase corresponds to the phase when the one or more packages 204 is being loaded inside the cargo area 200. The off-loading phase corresponds to the phase when the one or more packages 204 is being off-loaded out of the cargo area 200.

In an example, the calibrated data 318 may correspond to the variable transmission power of the antenna 104 required during the pre-loading phase, loading phase, and the off-loading phase. In an example, the variable transmission power of the antenna 104 may correspond to approximately 14-16 dB in the pre-loading phase, approximately 21-23 dB in the loading phase and between approximately 17-20 dB during the off-loading phase.

In some embodiments, the one or more processors 108 may be configured to adjust the variable transmission power of the antenna 104 in the one or more antenna sectors based at least on the load density (as shown in 320 of FIG. 3). In an example, the one or more processors 108 may be configured to minimize the variable transmission power of the antenna 104 in the pre-loading phase. Further, the one or more processors 108 may be configured to increase the variable transmission power of the antenna 104 in the loading phase and decrease the variable transmission power in the off-loading phase.

In an example, the one or more processors 108 may minimize the variable transmission power in all the antenna sectors as none of the one or more packages 204 may be stored during the pre-loading phase. Further, the RFID may increase the variable transmission power of the antenna 104 towards the antenna sector 2 and the antenna sector 8 where the load density increases due to loading of the one or more packages 204 during the loading phase. The variable transmission power may reach the maximum limit of transmission at end of the loading phase when all of the one or more packages 204 may be completely loaded inside the cargo area 200. Furthermore, the one or more processors 108 may decrease the variable transmission power of the antenna 104 as the load density in the antenna sector 2 and the antenna sector 8 decrease in an instance when the one or more of the one or more packages 204 earlier stored in the antenna sector 2 and the antenna sector 8 may be off-loaded out of the cargo area 200.

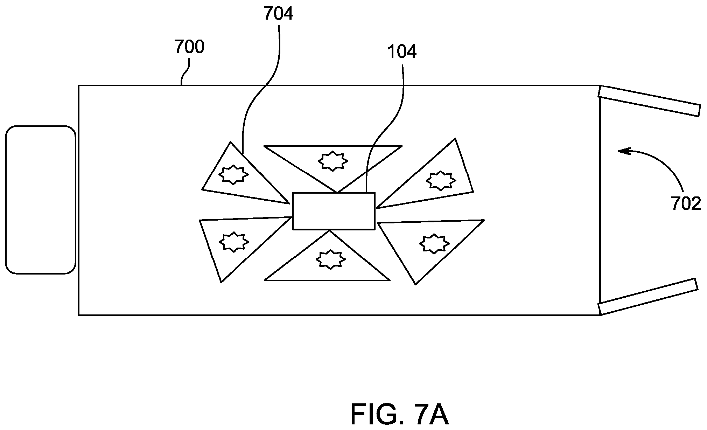

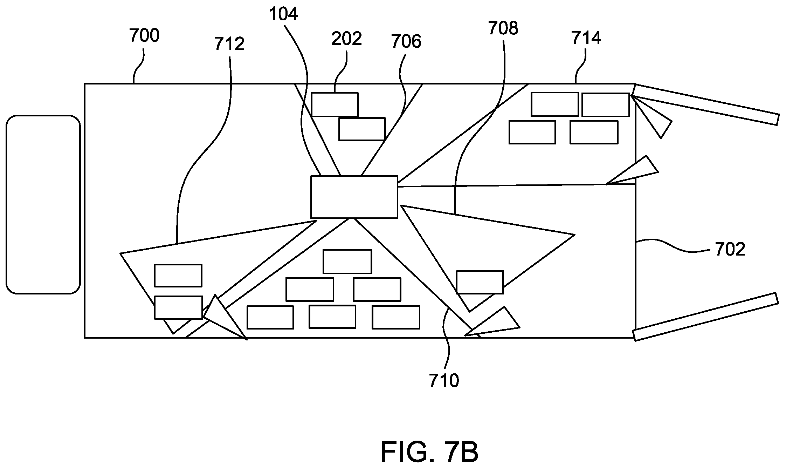

FIG. 7A illustrates a top view of the cargo area installed with the system 100 in a pre-loading phase, in accordance with an example embodiment of the present disclosure. FIG. 7B illustrates a top view of the cargo area installed with the system 100 in a loading phase, in accordance with an example embodiment of the present disclosure. FIGS. 7A-7B are described in conjunction with FIGS. 1-6.

In some embodiments, the system 100 may be installed in the cargo area 700 (i.e. the package transport car). The system 100 may comprise the at least one radar sensor 102, the antenna 104 and the RFID reader 106. In an example the at least one radar sensor 102 may be mounted on the ceiling 208 of the cargo area 700. In some embodiments, the cargo area 200 may comprise the entry point 206. Further, the at least one radar sensor 102 may be configured to detect presence of the one or more packages 204. Further, the RFID tag (i.e., a unique RFID tag) may be adhered to each of the one or more packages 204. The antenna 104 may be configured to transmit the plurality of RF signals of the predefined variable transmission power towards the one or more antenna sectors 704 (one or more zones). Further, the plurality of RF signals may facilitate scanning of the one or more packages 204 and reading of the RFID tag of each of the one or more packages 204 present within the one or more antenna sectors 704. Further, the at least one radar sensor 102 may sense the size information of the one or more packages 204. Further, based at least on the size information, the at least one of the one or more processors 108 may classify the one or more packages 204 into the type of each of the one or more packages 312 as per the respective RFID tag. Further, the one or more processors 108 of the RFID reader 106 may be configured to determine the weighted density factor 314 of the each of the one or more packages 204 based on the type and size information of the each of the one or more packages 204. Further, the one or more processors 108 may be configured to determine the load intensity in the one or more antenna sectors 704 and based on the load intensity the RFID reader 106 may adjust the variable transmission power of the antenna 104 according to the pre-loading phase, loading phase, or off-loading phase of the cargo area 700.

As illustrated in FIG. 7A, the pre-loading phase may correspond to a preparatory phase of the cargo area 200 (i.e., the package transport car). The pre-loading phase may include the carrier or car preparation and inspection, preparation of the cargo area 700, sorting of the one or more packages 204, documentation, and verification etc. In an instance, when the least number of the one or more packages 204 may be stored inside the cargo area 700, the one or more processors 108 may adjust the variable transmission power of the antenna 104 to minimum, as detection of the RFID tags may not be required. In another example, the variable transmission power of the one or more beams of the radio wave signals emitted by the antenna 104 may be minimized and distributed evenly among all the antenna sectors 704.

In an example, the system 100 in the preloading phase may comprise the at least one radar sensor 102 configured to detect the one or more packages 204. In an example, the at least one radar sensor 102 may be millimeter (mm) wave based radar sensors configured to emit mm wave signals in the range of 30 GHz - 300 GHz. In one instance, the at least one radar sensor 102 may determine a scenario wherein none of the one or more packages 204 stored inside the cargo area 700 during the pre-loading phase. Further, the antenna 104 may emit radio wave signals with the predefined variable transmission power and detect none of the RFID tags. Further, the one or more processors 108 may determine that load density in each of the antenna 104 is minimum. Furthermore, the one or more processors 108 may adjust the variable transmission power of the antenna 104 to minimum as none of the one or more packages 204 may be identified in any of the one or more zones or the one or more antenna sectors 704.

As illustrated in FIG. 7B, the loading phase may correspond to a scenario wherein the one or more packages 204 may be stored at one or more location inside the cargo area 700 The at least one radar sensor 102 may be configured to determine the one or more packages 204 being loaded inside the cargo area 700 during the loading phase and stored inside the cargo area 700. The RFID reader 106 may be configured to emit radio waves through the antenna 104 to power the RFID tags pasted on the one or more packages 204. The antenna 104 may transmit one or more beams of the radio frequency with variable transmission power towards one or more locations where the one or more packages 204 may be stored inside the cargo area 700.

In the illustrated example of FIG. 7B, four of the one or more packages 204 are stored close to one side of the entry door, six of the one or more packages 204 are stored at one side of the cargo area 700, two of the one or more packages 204 are stored at either side of the cargo area 700, and one of the one or more packages 204 are stored close to the other side of the entry door. The at least one radar sensor 102 may detect size information of each of the one or more packages 204, wherein one or more packages 204 being scanned by the antenna 104. Further, the one or more processors 108 may classify the one or more packages 204 into a type of each of the one or more packages 312 based at least on the RFID tag. The type of each of the one or more packages 312 may correspond to the one or more objects packed within each of the one or more packages 204. Further, the one or more processors 108 may determine the weighted density factor 314 of each of the one or more packages 204 based on the one or more objects and size information of the one or more packages 204. The information regarding the one or more objects in each of the one or more packages 204 with the respective RFID tag may be stored in the database 112 coupled to the one or more processors 108. The weighted density factor 314 may further depend on one or more characteristics of attenuation coefficient 502, reflection coefficient 504, absorbance coefficient 506, surface finish of the one or more objects, and size information of the one or more packages 204.

In some embodiments, the one or more processors 108 may determine the load density in the one or more antenna sectors 704 based on the weighted density factor 314. In an example, a load density may relate to distribution of the one or more packages 204 within a specified volume, typically relative to designated space inside the cargo area 700. The load density may assess how densely the designated space may be occupied by the one or more packages 204. In an example, an antenna sector 714 having four packages may have the highest load density and the antenna sector 708 having one package may have the lowest load density. In some embodiments, the one or more processors 108 may be configured to adjust the variable transmission power of the one or more antenna sectors 704 according to the load density. In an example, the variable transmission power may be highest for the antenna sector 704 having four packages and the variable transmission power may be lowest for an antenna sector 708 having one package. Further, the variable transmission power of the antenna 104 may be adjusted in an antenna sector 706, an antenna sector 710, and an antenna sector 712 according to number of one or more packages 204.

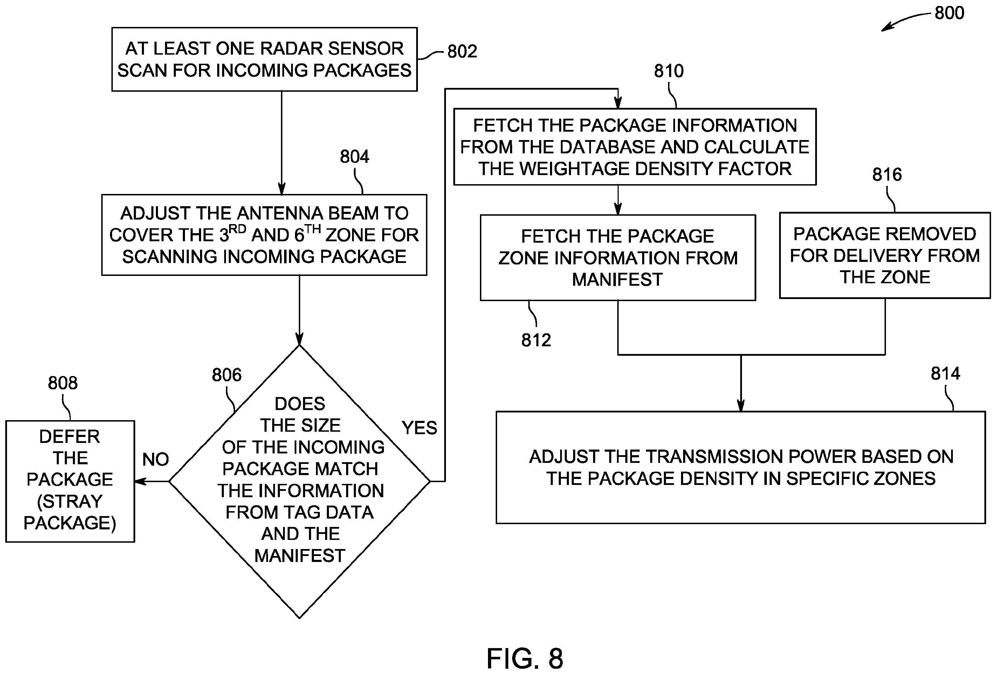

FIG. 8 illustrates a flowchart 800 showing operations of the system 100, in accordance with an example embodiment of the present disclosure.

At operation 802, the at least one radar sensor 102 may detect the one or more packages 204. In an example the at least one radar sensor 102 may correspond to the mm wave based radar sensor. The mm wave based radar sensor may be configured to determine the one or more packages 204 as an 'incoming package'. The at least one radar sensor 102 may transmit the mm-wave radio frequency signals towards the incoming package and measure the time taken by the mm-wave radio frequency signals to reflect back from the incoming package. The time taken by the mm-wave radio frequency signals to reflect back is proportional to a distance between the at least one radar sensor 102 and the incoming package.

In an example, the at least one radar sensor 102 may be arranged on front portion of the ceiling 208 close to the rear doorway 702 of a package transport car. The at least one radar sensor 102 may detect mm-wave radio frequency signals reflected back from the incoming package and generate an 'incoming package alert' towards the RFID reader 106. The at least one radar sensor 102 may be coupled with the one or more processors 108. In one embodiment, the one or more processors 108 may be configured to decode and execute any instructions received from the at least one radar sensor 102. The one or more processors 108 may be configured to transmit the 'incoming package alert' towards the RFID reader 106.

At operation 804, the RFID reader 106 may adjust the antenna 104 to transmit radio frequency (RF) waves towards the one or more sectors for scanning the incoming package. In some embodiments, the antenna 104 may be an omnidirectional radio frequency beam forming antenna. The antenna 104 (beam forming antenna) refers to the antenna 104 capable of dynamically changing the direction of transmission, without physically moving the antenna 104. The antenna 104 may be configured to scan the one or more packages 204 in the one or more antenna sectors 704 with the predefined variable transmission power. Further, the antenna 104 may scan RFID tags of the one or more packages 204. In an example, the RFID tags may be pasted on each of the one or more packages 204 and exposed to the scanning sector of the antenna 104 or the antenna sector. The scanning sector of the antenna 104 may correspond to a defined range under the read-coverage of the antenna. In another example, the antenna 104 may be configured to transmit and receive the radio frequency waves in order to communicate with the RFID tags.

In an example, the incoming package may be exposed to the antenna sector 3 and antenna sector 6 as per the range of the antenna 104. The antenna 104 may be configured to identify the incoming package on the basis of the respective RFID tag. The RFID tag may be pasted on the incoming package. Further, the antenna 104 may transmit the 'incoming package alert' towards the RFID reader 106, upon identifying the RFID tag. The RFID reader 106 may be communicatively coupled to the at least one radar sensor 102 via the one or more processors 108. The at least one radar sensor 102 may sense the size information of each of the one or more packages 204. The one or more processors 108 upon receiving the reflected signals from the at least one radar sensor 102, may transmit the range, velocity, and azimuth angle measurements of the one or more packages 204 towards the one or more processors 108. The one or more processors 108 may employ a size detection framework 302 having feature extraction algorithm, one or more objects detection algorithms along with filtering and post processing protocols over the range, velocity, and azimuth angle measurements to determine the size information of the one or more packages 204 (as explained in FIG.1).

At operation 806, the one or more processors 108 may determine if the determined size of the incoming package matches the information from tag data and the manifest information 600. In some embodiments, the one or more processors 108 may fetch the tag data from the database 112 and the manifest information 600 from the memory 110. The database 112 may be communicatively coupled to the RFID reader 106.

In an example, the database 112 may be a cloud database communicatively coupled to the RFID reader 106 and configured to store data regarding type of the each of the one or more packages 204 in relation to the respective RFID tags. The data relates to type of each of the one or more packages 312, wherein the type of each of the one or more packages 312 may related to type of one or more objects packed inside each of the one or more packages 204. the manifest information 600 may include layout of the cargo area 200 having labelled rows of racks 202. The manifest information 600 may comprise data related to total number of the one or more packages 204 with each of the one or more packages 204 having respective RFIDs. The layout may represent location of each of the one or more packages 204 on each of the row of the racks 202.

At operation 808, the one or more processors may defer the package i.e., the stray package when the size information of the incoming package may not match with the information from the tag data and the manifest information 600. In one embodiment, the one or more processors 108 may generate electronic signals to reject the incoming package or provide an alert 304 if the detected size information does not match the size information of one of the one or more packages 204. In an example, the one or more processors 108 may be communicatively coupled to a display screen (not shown) handled by a user. The one or more processors 108 may transmit the electronic signals towards the display screen via one or more processors 108, to display an alert message. The alert message may correspond to notification that the incoming package is rejected from being loaded inside the cargo area 200. The user may read the message on the display screen and defer the incoming package as a stray package. The stray package may correspond to the incoming package not to be loaded inside the cargo area 200 according to the manifest information 600.

At operation 810, if the size information of the incoming package matches with any of the data stored in the database 112 and the manifest information 600, the one or more processors 108 may fetch the matched data and use the data to determine the weighted density factor 314 of the incoming package. In an example, the weighted density factor 314 may be dependent at least one or more characteristics of attenuation, reflection, absorbance, surface finish, and size information related to the incoming package. In an example the one or more characteristics may be attenuation coefficient, reflection coefficient, absorbance coefficient, and surface finish (rough surface influence, smooth surface influence) of the type of one or more objects and size information of the incoming package.

In an example, the one or more processors 108 may determine that the incoming package contains a cooking pan made of copper based on the RFID tag. Further, the one or more processors 108 may fetch data from the database 112 to determine the type of one or more objects, e.g., the cooking pan, may be classified as home utensil made of copper. As per the database 112, the one or more processors 108 may determine the weighted density factor 314 for the cooking pan on the basis of one or more characteristics including attenuation coefficient 502, reflection coefficient 504, absorbance coefficient 506, surface finish (rough surface influence 510, smooth surface influence 508) of the cooking pan, and size information the incoming package. Further, the size information of the incoming package as determined via the at least one radar sensor 102 may correspond to length of X cm 514 (e.g. 30) cm and width Y cm 516 (e.g. 5cm).

In an example if the cooking pan has a uniform smooth surface, the weighted density factor 314 may be calculated as weighted density factor (smooth surface) = ((90 * 100) + (0.95 * 100) + (1-0.05) * 100 + 9) * XY, wherein X = length and Y = width. Accordingly, the weighted density factor 314 may be 293 XY for smooth surface in case of the cooking pan packed inside the incoming package. In an instance, if length may be 30 cm and the width may be 5 cm, the weighted density factor= 293*30*5 = 43,950. In an example, to confine the weighted density factor 314 into acceptable range the weighted density factor may be further processed as 10*log of (43950) = 106.91 Thus, the weighted density factor 314 of the incoming package having the cooking pan may be 106.91

At operation 812, the RFID reader 106 via the one or more processors 108, may fetch data from the manifest information 600 to determine the one or more antenna sectors 704. The one or more antenna sectors 704 may correlate with one or more racks 202 (i.e., marked as storage zones) in the cargo area 200. The one or more processors 108 may be configured to determine the one or more racks 202 with the particular storage zone where the incoming package may be stored. The storage zone may correlate to the one or more antenna sectors 704 that may be scanning those storage zones. Thus, one or more processors 108 may determine the antenna sector wherein the incoming package may be exposed to radio frequency signals of the antenna 104 while being stored in the particular storage zone.

In an example, the incoming package may be stored on a thirteenth shelf corresponding to a third storage zone 3. The third storage zone may cover various racks 202 along with the thirteenth shelf. Further, the third storage zone may be exposed to the antenna sector (e.g., twelfth antenna sector). The incoming package may be stored on the thirteenth shelf. In some embodiments, the one or more processors 108 may determine load density of the antenna sector where the incoming package is stored. In an example, the one or more processors 108 may determine load density of the twelfth antenna sector where the incoming package having the cooking pan may be stored. The load density of the twelfth antenna sector may be determined on the basis of the weighted density factor 314 of the cooking pan (the incoming package). The load density may assess how densely the twelfth antenna sector may be occupied by the one or more packages 204 along with the incoming package.

At operation 814, the one or more processors 108 may be configured to adjust the variable transmission power of the antenna 104 according to the load density of the one or more antenna sectors 704. In some embodiments, the load density may be high, depicting that high number of the one or more packages 204 may be stored. Therefore, the one or more processors 108 may increase the variable transmission power of the antenna 104 to be able to send the RF signals towards each of the one or more packages 204 efficiently. In another instance, where the load density may be low, depicting that low number of the one or more packages 204. Therefore, one or more processors 108 may decrease the variable transmission power of the antenna 104 to be able to send the RF signals towards each of the one or more packages 204 as per the requirements and unnecessary loss of RF signals may be avoided.

In an example, the one or more processors 108 may adjust the variable transmission power of the antenna 104 in the twelfth antenna sector according to the load density. In an instance, the one or more packages 204 in high number may already be stored on the thirteenth shelf, further, the incoming package may be added on the same thirteenth shelf. The load density of the thirteenth shelf (under the twelfth antenna sector) may increase. Furthermore, one or more processors 108 may increase the variable transmission power of the antenna 104 to be able to cater to the increased load density and scan each of the one or more packages 204.

At operation 816, during the off-loading phase or the delivery phase, the incoming package may be off-loaded out of the cargo area 200. In an example, the incoming package may be off-loaded at the time of delivery. In some embodiments, when any of the one or more packages 204 may be offloaded, the load density may decrease in the antenna sector where the off-loaded package may be previously stored. Further, the one or more processors 108 may decrease the variable transmission power of the antenna 104 in the antenna sector where the off-loaded package may be previously stored before being off-loaded out of the cargo area 200, prior to the delivery phase.

In an example, at the time of delivery or during the delivery phase, the incoming package may be off-loaded out of the cargo area 200. The incoming package or the off-loaded package in the delivery phase may be previously stored on the thirteenth shelf (under the twelfth antenna sector). The at least one radar sensor 102 may detect the package being off-loaded from the cargo area 200. Further, the load density in the thirteenth shelf (under the twelfth antenna sector) may decrease. Furthermore, the one or more processors 108 may decrease the variable transmission power of the twelfth antenna sector. In another example, the one or more processors 108 may be configured to decrease the variable transmission power linearly during the delivery phase as one or more of the one or more packages 204 may be off-loaded. The one or more processors 108 may be configured to minimize the variable transmission power when all the one or more packages 204 may be off-loaded.

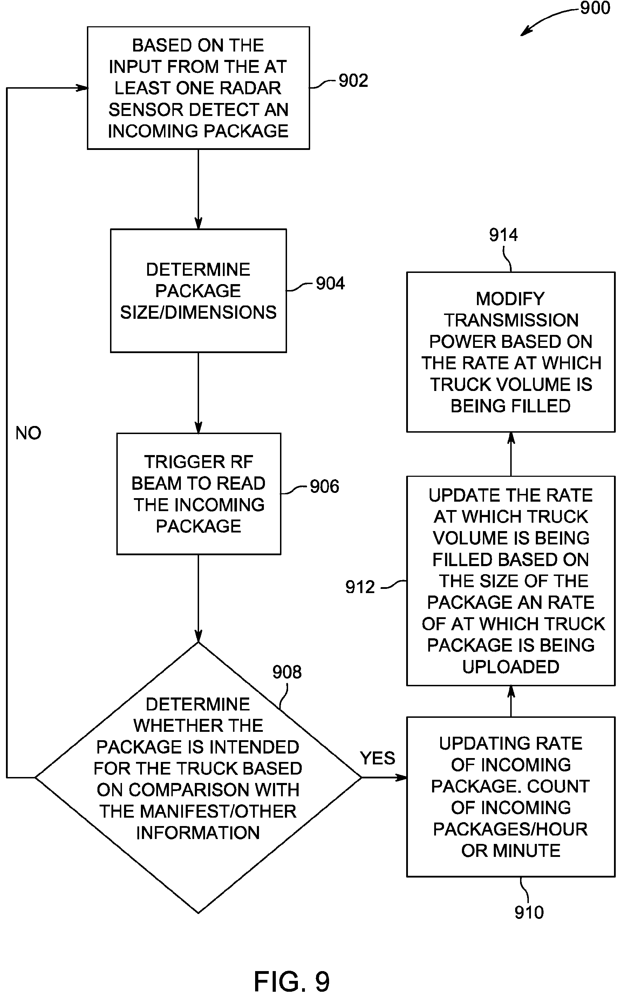

FIG. 9 illustrates a flowchart showing a method 900 of operating the system 100 in the loading phase, in accordance with an example embodiment of the present disclosure.

At operation 902, the at least one radar sensor 102 may be configured to determine an incoming package of the one or more packages 204. In an example, the at least one radar sensor 102 may be one or more millimeter wave based radar sensors configured to detect the one or more packages 204 stored, loaded or off-loaded from the cargo area 200. The at least one radar sensor 102 may detect the incoming package being loaded inside the cargo area 200 by detecting the at least one package in the field of view (FOV). The at least one radar sensor 102 may be arranged at different desired locations, such as at a front, middle and/or rear portion of the ceiling 208 of the cargo area 200 with respect to the rear doorway 206 of the package transport car.

In an example, when the one or more packages 204 (e.g., an incoming package) may be loaded inside the cargo area 200, the at least one radar sensor 102 mounted on the front portion of the ceiling 208 (closest to the entry door) may generate millimeter-wave in the range of 30 GHz - 300 GHz towards the incoming package. In some embodiments, the one or more processors 108 may be coupled to the at least one radar sensor 102 to process the mm-wave radio frequency signals reflected back from the incoming package. The time taken by the mm-wave radio frequency signals to reflect back is proportional to a distance between the at least one radar sensor 102 and the one or more packages 204. In an example, the distance may decrease with respect to time indicating that the incoming package may be loaded inside the cargo area 200.

At operation 904, the at least one sensor may be configured to sense the data corresponding to the size information of the incoming package. In some embodiments, upon receiving the reflected signals from the at least one radar sensor 102, the one or more processors 108 may transmit measurements including range, velocity, and azimuth angle of the incoming package to the RFID reader 106. The one or more processors 108 may utilize a feature extraction algorithm feature extraction algorithm, one or more objects detection algorithm along with filtering and post processing protocols over the range, velocity, and azimuth angle measurements to determine the size information of the incoming package.

In an example, the one or more processors 108 may employ a feature extraction algorithm to extract features from the range measurements. The feature extraction algorithm may correspond to methods used in machine learning and signal processing to identify and extract relevant characteristics or features from raw data. In some embodiments, these features may be used to identify the person carrying the incoming package. Further, the one or more processors 108 may employ an object detection algorithm to determine presence of the one or more packages 204.

In an example embodiment, the object detection algorithm may correspond to image processing, machine learning, or signal processing protocols to identify the one or more packages 204 (e.g., the incoming package) in the FOV, followed by classification and determining orientation of the incoming package in relation to position of the at least one radar sensor 102. Further, the one or more processors 108 may use the range measurements from the at least one radar sensor 102 to calculate size information or size of the incoming package. Depending on the orientation of the incoming package relative to the at least one of the at least one radar sensor 102, length, width, and height (size information) of the at least one of the one or more the packages may be derived. Further, the one or more processors 108 may use various filtering and post processing protocols to enhance accuracy of the at least one radar sensor 102. The filtering and post processing protocols may correspond to noise reduction measures involving data fusion with one or more of the at least one radar sensor 102 to determine the size information of incoming package.

At operation 906, the RFID reader 106, via the one or more processors 108 may cause the antenna 104 to emit one or more beams of radio frequency (RF) signals towards the incoming package. In some embodiments, the incoming package may include an RFID tag. In some embodiments, the RFID reader 106 may be communicatively coupled to the antenna 104. The RFID reader 106 may emit RF beams through the antenna 104 to power the RFID tags. Further, the RFID tags may reflect RFID signals back to the RFID reader 106. The RFID signals may correspond to data related to the one or more packages 204 which may be compared with data stored in the database 112. In an example, the database 112 may be a cloud database communicatively coupled to the RFID reader 106 and configured to store data regarding type of the one or more objects inside the incoming package linked to the respective RFID tag.

In an example, the incoming package may include the RFID tag depicting identity of the incoming package. The RFID reader 106 may be configured to read the RFID tag via the antenna. Further, the one or more processors 108 of the RFID reader 106 may fetch data from the database 112 to match the RFID tag information and identify the incoming package. Furthermore, the one or more processors 108 may match the RFID tag information with the data from the database 112 to determine the one or more objects packed inside the incoming package. In an example, the RFID tag may contain a unique identifier (UID) as the RFID tag information that distinguishes the incoming package from the other one or more packages 204. The data may include various UIDs and the list of one or more objects packed in the one or more packages 204 along with respective UIDs. The one or more processors 108 may match the UID of the incoming package with various UIDs and list of one or more objects to identify the incoming package.

At operation 908, the one or more processors 108 may be configured to determine whether the incoming package to be loaded inside the cargo area 200 as per the manifest information 600. The manifest information 600 may correspond to different locations (different rows of racks 202) inside the cargo area 200 where the one or more packages 204 may be stored. The different locations may be predefined before loading the one or more packages 204. The manifest information 600 may comprise data related to total number of the one or more packages 204 with each of the one or more packages 204 having respective RFIDs. The layout may represent location of each of the one or more packages 204 on each of racks 202 (shown in FIG. 6).

In an example, the one or more processors 108 may determine whether the UID of the incoming package matches with any of the UIDs in the manifest information 600. In an instance, if the UID of the incoming package matches with either of the UIDs in the manifest information 600, the RFID reader 106 via one or more processors 108 may wirelessly transmit the electronic signals towards the display screen to notify the user that the incoming package may be loaded inside the cargo area 200. In another instance, if the UID of the incoming package may not match with any of the UIDs in the manifest information 600, the RFID reader 106 via one or more processors 108 may notify the user that the incoming package may not be intended for the cargo area 200 of the particular cargo area, indicating an error. The error may correspond to the scenario wherein a wrong package may be loaded inside the cargo area 200.

At operation 910, the one or more processors 108 may be configured to detect the rate of loading the one or more incoming packages inside the cargo area 200. In some embodiments, the RFID reader 106 may be configured with a memory 110. The memory 110 may be configured to optimize reader operations of the RFID reader 106. In an example, the memory 110 may be configured to enable the RFID reader 106 to keep track of the RFID tags already read prior to the given point of time. In an example, the RFID reader 106 may read the RFID tags at the time 't' minutes, the memory 110 may enable the RFID reader 106 to track the RFID tags read at time 't-1' minutes. 't-2' minutes, 't-3' minutes, etc.

In an example, when the one or more packages 204 may be continuously loaded inside the cargo area 200, the RFID reader 106 may be configured to read the RFID tags one by one and store the respective UIDs of RFID tags read at time 't-1' minutes. 't-2' minutes, 't-3' minutes, etc. in the memory 110. Further, the RFID reader 106 may read the RFID tag at time 't' seconds and update the UID in the memory 110. The memory 110 may be configured to calculate the number of RFID tags being read by the RFID reader 106 and determine the number of the one or more packages 204 being loaded inside the cargo area 200. Further, the one or more processors 108 of the RFID reader 106 in coordination with the memory 110 may determine a rate of incoming package per minute. In an example, the rate of incoming package may be dependent on a total number of one or more packages 204 being loaded with respect to the time (t).

At operation 912, the one or more processors 108 may be configured to determine a rate of occupancy. The rate of occupancy is the rate at which volume of the cargo area 200 may be filled with the one or more packages 204. In some embodiments, the one or more processors 108 may be configured to determine the size information of the incoming package or the one or more packages 204 via the at least one radar sensor 102 (as explained at operation 904). In an example, when the one or more packages 204 is being loaded, the RFID reader 106 may store the size information of each of the one or more packages 204 in the memory 110. Further, the RFID reader 106 may determine the rate of occupancy on the basis of the size information of the each of the one or more packages 204 and the rate of the incoming package.

In an example, the cargo area 200 may be configured with a total capacity of 100 cubic meters and the one or more packages 204 may be loaded in the cargo area 200 (e.g., incoming packages). The RFID reader 106 along with the at least one radar sensor 102 may determine the size information of each of the incoming packages. In an instance, three of the one or more packages 204 may be loaded as a package A with size information 1m x 1m x 1m, a package B with size information 0.5m x 0.5m x 0.5m and a package C with size information 2m x 1m x 0.5m. The size information of the package A, the package B and the package C may be stored in the memory 110. Further, considering the package A, the package B and the package C being loaded in time of 1 hour, the rate of occupancy may be determined as:

$$rate\ of\ occupancy = (cumulative\ volume\ of\ the\ incoming\ packages)/time$$

In an example, the cumulative volume for the package A, the package B and the package C may be 2.125m$^3$ (as 1m$^3$ + 0.125m$^3$ + 1m$^3$). Further, the RFID may determine the rate of occupancy as 2.125m$^3$/ 1hour = 2.125 cubic meter per hour. The rate of occupancy may indicate rate of occupying the capacity of the cargo area 200 while loading the one or more packages 204 (of different size information).

At operation 914, the one or more processors 108 may be configured to adjust variable transmission power of the antenna 104 based on the rate of occupancy. In some embodiments, one or more processors 108 may be configured to adjust the variable transmission power of the antenna 104 according to the load density of the one or more antenna sectors 704. In some embodiments, the load density may be high, depicting that high number of the one or more packages 204 may be stored. Therefore, the one or more processors 108 may increase the variable transmission power of the antenna 104 to be able to send the RF signals towards each of the one or more packages 204 efficiently. In another instance, the load density may be low, depicting that low number of the one or more packages 204. Therefore, the one or more processors 108 may decrease the variable transmission power of the antenna 104 to be able to send the RF signals towards each of the one or more packages 204 as per the requirements and unnecessary loss of RF signals may be avoided. Similarly, the rate of occupancy may indicate rate of occupying the capacity of the cargo area 200 while loading the one or more packages 204.

In an example, the high rate of occupancy may depict that a higher number of the one or more packages 204 may be loaded with respect to time, and the one or more processors 108 may increase the variable transmission power of the antenna 104 in one or more antenna sectors 704. In another example, the low rate of occupancy may depict that a lower number of the one or more packages 204 may be loaded with respect to time, and the one or more processors 108 may decrease the variable transmission power of the antenna 104 in one or more antenna sectors 704. In an instance, 'n' number of the one or more packages 204 may be loaded in time 't' hours, further '2n' of the one or more the packages may be loaded in 't+1' hours, depicting an increase in the rate of the number of the one or more packages 204 being loaded. The rate of occupancy may be dependent on the cumulative volume of all of the one or more packages 204 being loaded, hence the rate of occupancy may increase. Further, the one or more processors 108 may increase the variable transmission power to transmit more RF signals towards the one or more antenna sectors 704 where the one or more packages 204 may be stored after being loaded inside the cargo area 200.

In another instance, n' number of the one or more packages 204 may be loaded in time 't' hours, further 'n/2' number of the one or more the packages may be loaded in 't+1' hours, depicting a decrease in the rate of the number of the one or more packages 204 being loaded with respect to time. The rate of occupancy may be dependent on the cumulative volume of all of the one or more packages 204 being loaded, hence the rate of occupancy may decrease. Further, the one or more processors 108 may decrease the variable transmission power to transmit more RF signals towards the one or more antenna sectors 704 with less rate of occupancy.

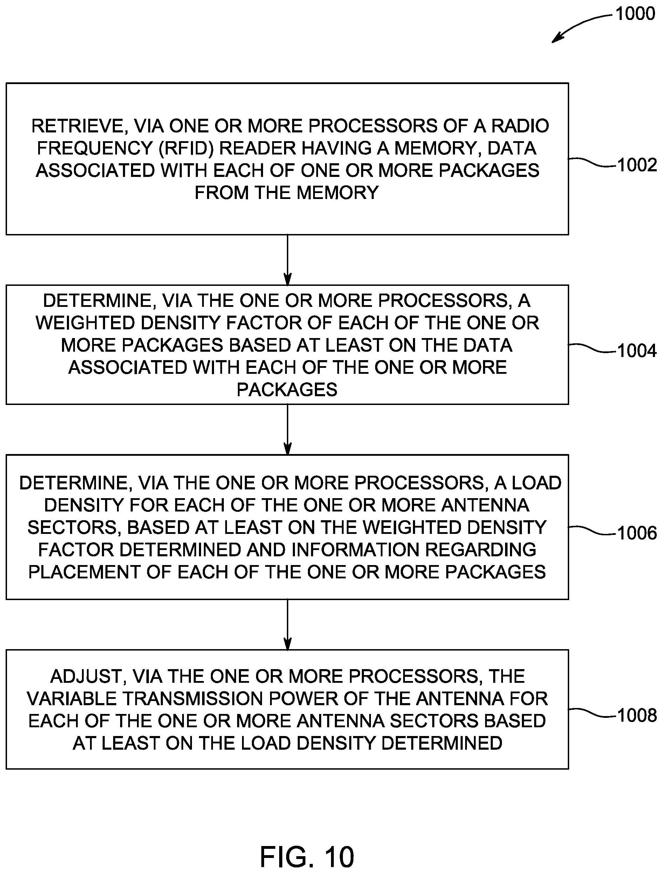

FIG. 10 illustrates a flowchart 1000 of a method, in accordance with an example embodiment of the present disclosure.

At operation 1002, the one or more processors 108 of the RFID reader 106 retrieve data associated with the one or more packages 204 from the memory 110. The data associated with each of the one or more packages corresponds to one or more characteristics of each of the one or more packages. Further, the data corresponds to an expected size of each of the one or more packages stored within the memory.

At operation 1004, the one or more processors 108 may determine the weighted density factor 314 of each of the one or more packages 204 based at least on the data sensed by the at least one radar sensor 102. In some embodiments, the one or more processors 108 of the RFID reader 106 may be configured to classify the plurality of packages into a type of one or more objects packed inside the each of the one or more packages 204 based on the RFID tag. In some embodiments, the type of one or more objects may include a material of the one or more objects, e.g., glass (like mirror), paper (like roll), word (like furniture), aluminum (like toys/gadgets), copper (like home utensils), steel (like home utensils), plastic (like toys), cardboard (like stationary), water (like beauty/shampoo), or cloth (like clothing).

In an example, the one or more processors 108 may classify the one or more packages 204 into the type of each of the one or more the packages based at least on the RFID tag. The information regarding the type of one or more objects packed inside the one or more packages 204 may be associated with the RFID tag. The RFID tag may include the unique identifier (UID). In an example, the database 112 may be a cloud database communicatively coupled to the RFID reader 106 and configured to store data regarding type of the each of the one or more packages 204 in relation to the respective UIDs. The data relates to type of each of the one or more packages 204, wherein the type of each of the one or more packages 204 may related to type of one or more objects packed inside each of the one or more packages 204.

In some embodiments, the RFID reader 106 may be configured to determine a weighted density factor 314 of each of the one or more packages 204 based at least on the type and size information of the one or more packages 204. In some embodiments, the weighted density factor 314 may be dependent at least one or more characteristics of attenuation, reflection, absorbance, surface finish, and size information related to the one or more packages 204. In an example the one or more characteristics may be attenuation coefficient, reflection coefficient, absorbance coefficient, and/or surface finish (rough surface influence, smooth surface influence) of the type of one or more objects and size information of each of the one or more packages 204.

In an example, the incoming package of the one or more packages 204 may comprise an aluminum toy, and the package may be of size information X (length) and Y (width). The size information of the package may be determined by the at least one radar sensor 102. The type of one or more objects (the aluminum based toy) may be determining by the RFID reader 106 via the one or more processors 108 by matching the UID of the RFID tag of the package with data stored in the database 112. Further, the RFID reader 106 via the one or more processors 108 may determine the weighted density factor 314 of the package. As shown in FIG. 4, if the toy has a uniform smooth surface, the weighted density factor 314 may be calculated as weighted density factor (smooth surface) = $((100 * 100) + (0.95 * 100) + (1-0.05) * 100 + 9) * XY$, wherein X = length (10 cm) and Y = width. Accordingly, the weighted density factor 314 may be 313 XY for smooth surface. In an instance, if length may be 10 cm and the width may be 10 cm, the weighted density factor= $313*10*10 = 31300$. In an example, to confine the weighted density factor 314 into acceptable range the weighted density factor 314 may be further processed as $10*log$ of $(31300) = 44.964$ Thus, in an example, wherein package may be loaded inside the cargo area 200, the RFID reader 106 via the at least one radar sensor 102, the antenna 104, and the database 112, may determine the weighted density factor 314 of the incoming package as 44.964 if the package contains the aluminum toy.

At operation 1006, the one or more processors 108 may determine the load density for each of the one or more antenna sectors 704 based at least on the weighted density factor 314 and information regarding placement of the one or more packages 204. In some embodiments, the one or more packages 204 e.g., the incoming package may be placed at a specific location inside the cargo area 200 of the car as shown in FIG. 4 The location may fall under the coverage of antenna sector 2 and the antenna sector 8. Thus, the RFID reader 106 may determine load density of the one or more antenna sectors 704.

In an example, the one or more packages 204 (e.g., the incoming package) may be placed at rack number 32 (FIG. 6) inside the cargo area 200 of the car. The rack number 32 may fall under the coverage of the antenna sector 2 and the antenna sector 8. Thus, the one or more processors 108 of the RFID reader 106 may determine load density of the one or more packages 204 at the antenna sector 2 and the antenna sector 8.

At operation 1008, the one or more processors 108 may adjust the variable transmission power of the antenna 104 in the one or more antenna sectors 704 based at least one the load density and the manifest information 600. In some embodiments, the RFID reader 106 may include a manifest information 600 to determine the one or more antenna sectors 704 based at least on the RFID tag and data of the manifest information 600. The manifest information 600 may correspond to different locations (different rows of racks 202) inside the cargo area 200 where the one or more packages 204 may be stored. The manifest information 600 may comprise the manifest information 600 related to total number of the one or more packages 204 with each of the one or more packages 204 having respective RFIDs. The layout may represent location of each of the one or more packages 204 with respect to the RFIDs on each of the racks 202. Thus, based on the manifest information 600, the RFID reader 106 may determine load density of the package in correlation with the one or more antenna sectors 704.

In an example, an instance where the load density of an area inside the cargo area 200 may be high, depicting that high number of the one or more packages 204 may be stored in the area. Therefore, the one or more processors 108 may increase the variable transmission power of the antenna 104 to be able to send RF signals towards each of the one or more packages 204 efficiently. In another instance, the load density of the area may be low, depicting that low number of the one or more packages 204 may be stored in the area. Therefore, the one or more processors 108 may decrease the variable transmission power of the antenna 104 to be able to send RF signals towards each of the one or more packages 204 as per the requirements and unnecessary loss of RF signals may be avoided.

The present disclosure may provide various embodiments configured to adjust the variable transmission power of the antenna 104 according to the one or more packages 204 being loaded or off-loaded inside the cargo area 200. Further, the embodiments may be configured to minimize the variable transmission power when none of the one or more packages 204 may be present inside the car. The embodiments may vary variable transmission power of the antenna 104 to vary the read-coverage of the antenna 104 towards the packages loaded inside the carrier. The embodiments may be configured to conserve energy by adjusting the variable transmission power of the antenna 104 as per the actual requirements during the pre-loading, loading, and off-loading of packages inside the carrier.

In some embodiments, the radar sensor 102 may be communicatively coupled to the one or more processors 108. In some embodiments, the radar sensor 102 may be configured to detect the size information associated with each of the one or more packages. Further, the one or more processors may be configured to provide an alert if the detected size information does not match the expected size of one of the one or more packages that are saved within the memory 110. Further, upon receiving signal from the radar sensor 102, the one or more processors 108 cause the antenna to emit one or more beams toward an entry point.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

**Claims**

1. A system comprising:

an antenna configured to emit one or more beams of a variable transmission power in one or more antenna sectors; and

a radio frequency (RFID) reader communicatively coupled to the antenna to receive an RFID signal from each of one or more incoming packages, wherein the RFID reader having one or more processors coupled to a memory, the one or more processors are configured to:

retrieve data associated with each of the one or more packages from the memory;

determine a weighted density factor of each of the one or more packages based at least on the data associated with each of the one or more packages;

determine a load density for each of the one or more antenna sectors, based at least on the weighted density factor determined and information regarding placement of each of the one or more packages; and

adjust the variable transmission power of the antenna for each of the one or more antenna sectors based at least on the load density determined.

2. The system of claim 1, further comprising at least one radar sensor communicatively coupled to the one or more processors and configured to detect size information associated with each of the one or more packages.

3. The system of claim 2, wherein the data comprises an expected size of each of the one or more packages stored within the memory, wherein the one or more processors are configured to provide an alert if the detected size information does not match the expected size of one of the one or more packages.

4. The system of claim 2, wherein upon receipt of a signal from the at least one radar sensor, the one or more processors cause the antenna to emit one or more beams toward an entry point.

5. The system of claim 1, wherein the antenna comprises a beamforming antenna (BFA), wherein the BFA is configured to focus the one or more beams in each of the one or more antenna sectors based at least on the adjusted variable transmission power.

6. The system of claim 1, wherein the data associated with each of the one or more packages comprises one or more characteristics of each of the one or more packages; and

wherein the one or more characteristics comprise at least one of attenuation coefficient, absorbance coefficient, reflectivity coefficient related to radio frequency (RF) waves, smoothness, roughness, and thickness of each of the one or more packages.

7. The system of claim 1, wherein the information regarding placement of each of the one or more packages comprises information related to a predefined placement of each of the one or more packages within one or more zones; and

wherein the each of the one or more zones corresponds to one of the one or more antenna sectors, and wherein the one or more zones are located in at least one of a vehicle or a warehouse.

8. The system of claim 1, wherein the one or more processors are configured to determine a distance between the antenna and each of the one or more packages based at least on the information regarding placement of each of the one or more packages, to adjust a predefined transmission power of the antenna.

9. A method comprising:

retrieving, via one or more processors of a radio frequency (RFID) reader having a memory, data associated with each of one or more packages from the memory;

determining, via the one or more processors, a weighted density factor of each of the one or more packages based at least on the data associated with each of the one or more packages;

determining, via the one or more processors, a load density for each of one or more antenna sectors, based at least on the weighted density factor determined and information regarding placement of each of the one or more packages; and

adjusting, via the one or more processors, a variable transmission power of an antenna for each of the one or more antenna sectors based at least on the load density determined.

10. The method of claim 9, further comprising detecting, via at least one radar sensor communicatively coupled to the one or more processors, size information associated with each of the one or more packages.

11. The method of claim 9, wherein the data comprises an expected size of each of the one or more packages stored within the memory, wherein the one or more processors are configured to provide an alert if the detected size information does not match the expected size of one of the one or more packages.

12. The method of claim 9, wherein upon receipt of a signal from at least one radar sensor communicatively coupled to the one or more processors, the one or more processors cause the antenna to emit one or more beams toward an entry point.

13. The method of claim 12, wherein the antenna comprises a beamforming antenna (BFA), wherein the BFA is configured to focus the one or more beams in each of the one or more antenna sectors based at least on the adjusted variable transmission power;

   wherein the data associated with each of the one or more packages comprises one or more characteristics of each of the one or more packages; and
   wherein the one or more characteristics comprise at least one of attenuation coefficient, absorbance coefficient, reflectivity coefficient related to radio frequency (RF) waves, smoothness, roughness, and thickness of each of the one or more packages.

14. The method of claim 9, wherein the information regarding placement of each of the one or more packages comprises information related to a predefined placement of each of the one or more packages within one or more zones; and wherein the each of the one or more zones corresponds to one of the one or more antenna sectors, and wherein the one or more zones are located in at least one of a vehicle or a warehouse.

15. The method of claim 9, further comprising, determining, via the one or more processors, a distance between the antenna and each of the one or more packages based at least on the information regarding placement of each of the one or more packages, to adjust a predefined transmission power of the antenna.

100

114

COMMUNICATION
CIRCUITRY

116

112

DATABASE

INPUT/OUTPUT
CIRCUITRY

RADIO FREQUENCY
IDENTIFICATION (RFID) READER

106

104

ANTENNA

ONE OR MORE PROCESSORS

108

MEMORY

110

AT LEAST ONE
RADAR SENSOR

102

FIG. 1

FIG. 2

FIG. 3

400

SETUP AND
CALIBRATION — 402

DATA
ACQUISITION — 404

SIGNAL
PROCESSING — 406

OBJECT
DETECTION — 408

DIMENSION
CALCULATION — 410

FILTERING AND
POST-PROCESSING — 412

FIG. 4

| MATERIAL | ATTENUATION COEFFICIENT | REFLECTION COEFFICIENT | ABSORBANCE COEFFICIENT | SMOOTH SURFACE INFLUENCE | ROUGH SURFACE INFLUENCE |
|---|---|---|---|---|---|
| GLASS LIKE MIRROR | 0.02 | 0.05 | 0.93 | 9 | 3 |
| PAPER LIKE PAPER ROLL | 0.01 | 0.02 | 0.97 | 7 | 2 |
| WOOD LIKE FURNITURE | 0.03 | 0.05 | 0.92 | 8 | 4 |
| ALUMINIUM LIKE TOYS/ GADGET | 100 | 0.95 | 0.05 | 9 | 7 |
| COPPER LIKE HOME UTENSIL | 90 | 0.95 | 0.05 | 9 | 6 |
| STEEL LIKE HOME UTENSIL | 70 | 0.95 | 0.05 | 9 | 5 |
| PLASTIC LIKE TOYS | 0.005 | 0.01 | 0.99 | 5 | 1 |
| CARDBOARD LIKE STATIONARY | 0.01 | 0.03 | 0.96 | 7 | 2 |
| WATER LIKE BEAUTY/ SHAMPOO | 0.2 | 0.01 | 0.99 | 9 | 8 |
| CLOTH | 0.01 | 0.02 | 0.97 | 7 | 3 |

FIG. 5

EP 4 703 997 A1

| LENGTH (X) | WIDTH (Y) | WEIGHTED AVERAGE (SMOOTH SURFACE) | WEIGHTED AVERAGE (ROUGH SURFACE) |
|---|---|---|---|
| 512 | 514 | 516 | 518 |
| X | Y | 23XY | 17XY |
| X | Y | 13XY | 10XY |
| X | Y | 24XY | 20XY |
| X | Y | 313XY | 245XY |
| X | Y | 293XY | 227XY |
| X | Y | 273XY | 205XY |
| X | Y | 16XY | 6XY |
| X | Y | 23XY | 18XY |
| X | Y | 329XY | 264XY |
| X | Y | 23XY | 17XY |

FIG. 5 (CONTINUED)

MT. PLEASANT

BAY: 0037                          LOAD: 02E

TOTAL:                             AIR:
                                   SAVERS:

251    3000    02E    1000
       34             35

       3999   4000   2000   1999
       7000          5000
33     30            31
       4000   FDL    FDR    30
7999   8000    0      0     2999   5999
                           6000
       22     MFR    MFR    36
       0       0      0
8999         RDL  RDC  RDR   6000
              0    0    0

600
604
602

FIG. 6

26

FIG. 7A

FIG. 7B

FIG. 8

EP 4 703 997 A1

900

BASED ON THE INPUT FROM THE AT LEAST ONE RADAR SENSOR DETECT AN INCOMING PACKAGE — 902

DETERMINE PACKAGE SIZE/DIMENSIONS — 904

TRIGGER RF BEAM TO READ THE INCOMING PACKAGE — 906

NO

DETERMINE WHETHER THE PACKAGE IS INTENDED FOR THE TRUCK BASED ON COMPARISON WITH THE MANIFEST/OTHER INFORMATION — 908

YES

914

MODIFY TRANSMISSION POWER BASED ON THE RATE AT WHICH TRUCK VOLUME IS BEING FILLED

UPDATE THE RATE AT WHICH TRUCK VOLUME IS BEING FILLED BASED ON THE SIZE OF THE PACKAGE AN RATE OF AT WHICH TRUCK PACKAGE IS BEING UPLOADED — 912

UPDATING RATE OF INCOMING PACKAGE. COUNT OF INCOMING PACKAGES/HOUR OR MINUTE

910

FIG. 9

1000

RETRIEVE, VIA ONE OR MORE PROCESSORS OF A RADIO FREQUENCY (RFID) READER HAVING A MEMORY, DATA ASSOCIATED WITH EACH OF ONE OR MORE PACKAGES FROM THE MEMORY
—1002

DETERMINE, VIA THE ONE OR MORE PROCESSORS, A WEIGHTED DENSITY FACTOR OF EACH OF THE ONE OR MORE PACKAGES BASED AT LEAST ON THE DATA ASSOCIATED WITH EACH OF THE ONE OR MORE PACKAGES
—1004

DETERMINE, VIA THE ONE OR MORE PROCESSORS, A LOAD DENSITY FOR EACH OF THE ONE OR MORE ANTENNA SECTORS, BASED AT LEAST ON THE WEIGHTED DENSITY FACTOR DETERMINED AND INFORMATION REGARDING PLACEMENT OF EACH OF THE ONE OR MORE PACKAGES
—1006

ADJUST, VIA THE ONE OR MORE PROCESSORS, THE VARIABLE TRANSMISSION POWER OF THE ANTENNA FOR EACH OF THE ONE OR MORE ANTENNA SECTORS BASED AT LEAST ON THE LOAD DENSITY DETERMINED
—1008

FIG. 10

Europäisches
Patentamt
European
Patent Office
Office européen
des brevets

## EUROPEAN SEARCH REPORT

**Application Number**

EP 25 19 1888

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/049334 A1 (FORSTER IAN J [GB]) 18 February 2021 (2021-02-18) | 1,5,7,8, 14,15 | INV. G06Q10/087 |
| A | * paragraphs [0001] - [0010] * <br> * paragraphs [0022] - [0041] * <br> * figures * | 2-4,6, 10-13 | |
| | ----- | | |
| A | CN 118 396 000 A (SHENZHEN NATION RFID TECH CO LTD) 26 July 2024 (2024-07-26) <br> * paragraphs [0001] - [0025] * <br> * paragraphs [0029] - [0048] * | 1-15 | |
| | ----- | | |
| A | US 2023/252399 A1 (KHOCHE AJAY [US] ET AL) 10 August 2023 (2023-08-10) <br> * paragraphs [0004] - [0009] * <br> * paragraphs [0141] - [0163] * <br> * figures * | 1-15 | |
| | ----- | | |

**TECHNICAL FIELDS
SEARCHED (IPC)**

G06Q

The present search report has been drawn up for all claims

| Place of search | Date of completion of the search | Examiner |
|---|---|---|
| Munich | 10 December 2025 | Aguilar, José María |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 19 1888

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2025

| Patent document cited in search report | Publication date | Patent family member(s) | Publication date |
|---|---|---|---|
| US 2021049334 A1 | 18-02-2021 | NONE | |
| CN 118396000 A | 26-07-2024 | NONE | |
| US 2023252399 A1 | 10-08-2023 | NONE | |

EPO FORM P0459

For more details about this annex : see Official Journal of the European Patent Office, No. 12/82